# EUROPÄISCHE PATENTANMELDUNG

(11) **EP 4 492 324 A1**
(43) Veröffentlichungstag der Anmeldung: **15.01.2025**
(21) Anmeldenummer: 23184900.1
(22) Anmeldetag: 12.07.2023
(51) Int. Cl.: G06T 7/00

(54) **ERKENNEN VON ARTEFAKTEN IN SYNTHETISCHEN MEDIZINISCHEN AUFNAHMEN**

(71) Anmelder: Bayer AG, 51373 Leverkusen (DE)
(72) Erfinder: Die Erfindernennung liegt noch nicht vor
(74) Vertreter: BIP Patents

(57) **Zusammenfassung**

Die vorliegende Offenbarung betrifft das technische Gebiet der Erzeugung von synthetischen medizinischen Aufnahmen. Gegenstände der vorliegenden Offenbarung sind ein Verfahren, ein Computersystem und ein computerlesbares Speichermedium umfassend ein Computerprogramm zum Erkennen von Artefakten in synthetischen medizinischen Aufnahmen.

## Beschreibung

### HINWEIS ZUM URHEBERRECHT

Ein Teil der Offenbarung dieser Patentschrift enthält Material, das dem Urheberrechtsschutz unterliegt. Der Urheberrechtsinhaber hat keine Einwände gegen die Faksimile-Reproduktion Patentschrift, wie sie in einer Patentakte oder in den Akten des Patentamts erscheint, behält sich aber ansonsten alle Urheberrechte und Rechte jeglicher Art vor. ^{©} 2023 Bayer AG

### TECHNISCHES GEBIET

Die vorliegende Offenbarung betrifft das technische Gebiet der Erzeugung von synthetischen medizinischen Aufnahmen. Gegenstände der vorliegenden Offenbarung sind ein Verfahren, ein Computersystem und ein computerlesbares Speichermedium umfassend ein Computerprogramm zum Erkennen von Artefakten in synthetischen medizinischen Aufnahmen.

### EINLEITUNG

Künstliche Intelligenz findet zunehmend Einzug in die Medizin. Modelle des maschinellen Lernens werden nicht nur verwendet, um Anzeichen von Krankheiten in medizinischen Aufnahmen des menschlichen oder tierischen Körpers zu identifizieren (siehe z.B. WO2018202541A1, WO2020229152A1), sie werden zunehmend auch eingesetzt, um synthetische (künstliche) medizinische Aufnahmen zu erzeugen.

WO2021052896A1 und WO2021069338A1 beschreiben beispielsweise Verfahren zum Erzeugen einer künstlichen medizinischen Aufnahme, die einen Untersuchungsbereich eines Untersuchungsobjekts in einer ersten Zeitspanne zeigt, auf Basis von medizinischen Aufnahmen, die den Untersuchungsbereich in einer zweiten Zeitspanne zeigen, mit Hilfe eines trainierten Modells des maschinellen Lernens. Mit Hilfe des Verfahrens können beispielsweise radiologische Untersuchungen beschleunigt werden; anstatt radiologische Aufnahmen über eine längere Zeitspanne zu messen, werden Messungen nur innerhalb eines Teils der Zeitpanne gemessen und eine oder mehrere radiologische Aufnahmen für den übrigen Teil der Zeitspanne mit Hilfe des trainierten Modells vorhergesagt.

WO2019/074938A1 und WO2022184297A1 beschreiben beispielsweise Verfahren zum Erzeugen einer künstlichen radiologischen Aufnahme, die einen Untersuchungsbereich eines Untersuchungsobjekts nach der Applikation einer Standardmenge eines Kontrastmittels zeigt, obwohl nur eine geringere Menge an Kontrastmittel als die Standardmenge appliziert worden ist. Die in WO2019/074938A1 und WO2022184297A beschriebenen Verfahren können also zur Reduzierung der Menge an Kontrastmittel eingesetzt werden.

Die von den trainierten Modellen des maschinellen Lernens erzeugten medizinischen Aufnahmen können Fehler aufweisen (siehe z.B.: K. Schwarz et al.: On the Frequency Bias of Generative Models, https://doi.org/10.48550/arXiv.2111.02447).

Solche Fehler können problematisch sein, da ein Arzt auf Basis der künstlichen medizinischen Aufnahmen eine Diagnose stellen und/oder eine Therapie initiieren könnte. Wenn ein Arzt künstliche medizinische Aufnahmen begutachtet, muss der Arzt wissen, ob Merkmale in den künstlichen medizinischen Aufnahmen auf reale Merkmale des Untersuchungsobjekts zurückgeführt werden können, oder ob es sich um Artefakte handelt, die auf Fehler bei der Vorhersage durch das trainierte Modell des maschinellen Lernens zurückzuführen sind.

Diese und weitere Probleme werden durch die Gegenstände der vorliegenden Offenbarung adressiert.

Ein erster Gegenstand der vorliegenden Offenbarung ist ein computer-implementiertes Verfahren zum Erzeugen mindestens eines Vertrauenswertes für ein synthetisches Bild, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Ermitteln mindestens eines Vertrauenswertes,
- Ausgeben des mindestens einen Vertrauenswertes.

Eine erste Ausführungsform des ersten Gegenstands der vorliegenden Offenbarung ist ein computer-implementiertes Verfahren zum Erzeugen mindestens eines Vertrauenswertes für ein synthetisches Bild, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Ermitteln eines Streuungsmaßes korrespondierender Bildelemente der erzeugten synthetischen Bilder, wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

Eine weitere Ausführungsform des ersten Gegenstands der vorliegenden Offenbarung ist ein computer-implementiertes Verfahren zum Erzeugen mindestens eines Vertrauenswertes für ein synthetisches Bild, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Zusammenführen der Mehrzahl an synthetischen Bildern des Untersuchungsbereichs des Untersuchungsobjekts zu einem aggregierten synthetischen Bild des Untersuchungsbereichs des Untersuchungsobj ekts,
- Ermitteln eines Streuungsmaßes korrespondierender Bildelemente des empfangenen Bildes und des aggregierten synthetischen Bildes, wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

Eine weitere Ausführungsform des ersten Gegenstands der vorliegenden Offenbarung ist ein computer-implementiertes Verfahren zum Erzeugen mindestens eines Vertrauenswertes für ein synthetisches Bild, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Ermitteln mindestens eines Vertrauenswertes auf Basis der Farbwerte miteinander korrespondierender Bildelemente der erzeugten synthetischen Bilder, wobei miteinander korrespondierende Bildelemente denselben Teilbereich des Untersuchungsbereichs repräsentieren,
- Ausgeben des mindestens einen Vertrauenswertes.

Eine weitere Ausführungsform des ersten Gegenstands der vorliegenden Offenbarung ist ein computer-implementiertes Verfahren zum Erzeugen mindestens eines Vertrauenswertes für ein synthetisches Bild, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Ermitteln eines Streuungsmaßes auf Basis der Farbwerte miteinander korrespondierender Bildelemente der erzeugten synthetischen Bilder, wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

Eine weitere Ausführungsform des ersten Gegenstands der vorliegenden Offenbarung ist ein computer-implementiertes Verfahren zum Erzeugen mindestens eines Vertrauenswertes für ein synthetisches Bild, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Zusammenführen der Mehrzahl an synthetischen Bildern des Untersuchungsbereichs des Untersuchungsobjekts zu einem aggregierten synthetischen Bild des Untersuchungsbereichs des Untersuchungsobj ekts,
- Ermitteln eines Streuungsmaßes auf Basis der Farbwerte korrespondierender Bildelemente des empfangenen Bildes und des aggregierten synthetischen Bildes, wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

Ein weiterer Gegenstand der vorliegenden Offenbarung ist ein Computersystem umfassend
- eine Empfangseinheit,
- eine Steuer- und Recheneinheit und
- eine Ausgabeeinheit,
wobei die Steuer- und Recheneinheit konfiguriert ist,
- Die Empfangseinheit zu veranlassen, mindestens ein Bild eines Untersuchungsbereichs eines Untersuchungsobjekts zu empfangen, wobei das mindestens eine Bild eine Vielzahl an Bildelementen umfasst, wobei jedes Bildelement der Vielzahl an Bildelementen einen Teilbereich des Untersuchungsbereichs repräsentiert,
- eine Mehrzahl an synthetischen Bildern des Untersuchungsbereichs des Untersuchungsobjekts auf Basis des empfangenen Bildes mittels eines generativen Modells zu erzeugen, wobei jedes synthetische Bild mit einer unterschiedlichen Variante des generativen Modells erstellt wird,
- mindestens einen Vertrauenswertes zu ermitteln,
- die Ausgabeeinheit zu veranlassen, den mindestens einen Vertrauenswert auszugeben.

Ein weiterer Gegenstand der vorliegenden Offenbarung ist ein computerlesbares Speichermedium umfassend ein Computerprogramm, das, wenn es in einen Arbeitsspeicher eines Computersystems geladen wird, das Computersystem veranlasst, folgende Schritte auszuführen:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Ermitteln mindestens eines Vertrauenswertes,
- Ausgeben des mindestens einen Vertrauenswertes.

### AUSFÜHRLICHE BESCHREIBUNG

Die Erfindung wird im Folgenden näher erläutert, ohne zwischen den Gegenständen der vorliegenden Offenbarung (Verfahren, Computersystem, computerlesbares Speichermedium) zu unterscheiden. Vielmehr sollen die nachfolgenden Ausführungen sinngemäß für alle Gegenstände der Erfindung gelten, unabhängig davon, in welchem Zusammenhang (Verfahren, Computersystem, computerlesbares Speichermedium) sie beschrieben werden.

Wenn in der vorliegenden Beschreibung oder in den Ansprüchen Schritte in einer Reihenfolge angegeben sind, bedeutet dies nicht unbedingt, dass die Erfindung auf die angegebene Reihenfolge beschränkt ist. Vielmehr ist es denkbar, dass die Schritte auch in einer anderen Reihenfolge oder auch parallel zueinander ausgeführt werden können, es sei denn, ein Schritt baut auf einem anderen auf, was zwingend erfordert, dass der aufbauende Schritt anschließend ausgeführt wird (dies wird aber im Einzelfall klar). Die genannten Reihenfolgen sind somit bevorzugte Ausführungsformen der vorliegenden Offenbarung.

Die Erfindung wird an einigen Stellen in Bezug auf Zeichnungen näher erläutert. Dabei sind in den Zeichnungen konkrete Ausführungsformen mit konkreten Merkmalen und Merkmalskombinationen dargestellt, die in erster Linie der Veranschaulichung dienen; die Erfindung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausführungsformen beschränkt sein.

Die vorliegende Offenbarung beschreibt Mittel zum Beurteilen der Vertrauenswürdigkeit eines synthetischen Bildes eines Untersuchungsbereichs eines Untersuchungsobjekts.

Unter dem Begriff "Vertrauenswürdigkeit" wird verstanden, dass eine Person, die das synthetische Bild begutachtet, darauf vertrauen kann, dass Strukturen und/oder Morphologien und/oder Texturen, die in dem synthetischen Bild dargestellt sind, auf reale Strukturen und/oder reale Morphologien und/oder reale Texturen des Untersuchungsbereichs des Untersuchungsobjekts zurückgeführt werden können und keine Artefakte sind.

Der Begriff "synthetisch" bedeutet, dass das synthetische Bild nicht das unmittelbare Ergebnis einer Messung an einem realen Untersuchungsobjekt ist, sondern künstlich erzeugt (berechnet) wurde. Dabei kann ein synthetisches Bild jedoch auf gemessenen Bildaufnahmen eines realen Untersuchungsobjekts basieren, d.h. es können ein oder mehrere gemessene Bildaufnahmen eines realen Untersuchungsobjekts verwendet werden, um ein synthetisches Bild zu erzeugen. In der Einleitung und in der weiteren Beschreibung der vorliegenden Offenbarung sind Beispiele für synthetische Bilder beschrieben.

Das "Untersuchungsobjekt" ist vorzugsweise ein Mensch oder ein Tier, vorzugsweise ein Säugetier, ganz besonders bevorzugt ein Mensch.

Der "Untersuchungsbereich" ist ein Teil des Untersuchungsobjekts, zum Beispiel ein Organ eines Menschen oder Tieres wie beispielsweise die Leber, das Gehirn, das Herz, die Niere, die Lunge, der Magen, der Darm, die Bauchspeicheldrüse, die Schilddrüse, die Prostata, die Brust oder ein Teil der genannten Organe oder mehrere Organe oder ein anderer Teil des Untersuchungsobjekts. Der Untersuchungsbereich kann auch mehre Organe und/oder Teile von mehreren Organen umfassen.

Der Begriff "Bild" bezeichnet eine Datenstruktur, die eine räumliche Verteilung eines physikalischen Signals darstellt. Die räumliche Verteilung kann eine beliebige Dimension haben, z.B. 2D, 3D, 4D oder eine höhere Dimension. Die räumliche Verteilung kann eine beliebige Form haben, z.B. ein Gitter bilden und dadurch Pixel oder Voxel definieren, wobei das Gitter unregelmäßig oder regelmäßig sein kann.

Das physikalische Signal kann ein beliebiges Signal sein, z.B. Protonendichte, Echogenität, Durchlässigkeit, Absorptionsvermögen, Relaxivität, Informationen über rotierende Wasserstoffkeme in einem Magnetfeld, Farbe, Graustufe, Tiefe, Oberflächen- oder Volumenbelegung.

Unter dem Begriff "Bild" wird vorzugsweise eine zwei-, drei- oder höherdimensionale visuell erfassbare Repräsentation des Untersuchungsbereichs des Untersuchungsobjekts verstanden. Üblicherweise handelt es sich bei dem empfangenen Bild um ein digitales Bild. Der Begriff "digital" bedeutet, dass das Bild von einer Maschine, in der Regel einem Computersystem, verarbeitet werden kann. Unter "Verarbeitung" werden die bekannten Verfahren zur elektronischen Datenverarbeitung (EDV) verstanden.

Ein digitales Bild kann mit Computersystemen und Software verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bilder können mit geeigneten Anzeigegeräten visualisiert werden, wie zum Beispiel mit Computermonitoren, Projektoren und/oder Druckern.

In einem digitalen Bild werden Bildinhalte üblicherweise durch ganze Zahlen repräsentiert und gespeichert. In den meisten Fällen handelt es sich um zwei- oder dreidimensionale Bilder, die binär kodiert und gegebenenfalls komprimiert sein können. Bei den digitalen Bildern handelt es sich üblicherweise um Rastergrafiken, bei denen die Bildinformation in einer gleichmäßigen Rasterung abgelegt ist. Rastergrafiken bestehen aus einer rasterförmigen Anordnung von so genannten Bildpunkten (Pixel) im Fall von zweidimensionalen Darstellungen oder Volumenelementen (Voxel) im Fall dreidimensionaler Darstellungen. Bei vierdimensionalen Darstellungen wird häufig der Begriff Doxel *(dynamic voxel)* für die Bildelemente verwendet. Bei höherdimensionalen Darstellungen oder allgemein wird im Englischen manchmal auch der Begriff "n-xel" verwendet, wobei n die jeweilige Dimension angibt. In dieser Offenbarung wird allgemein der Begriff Bildelement verwendet. Ein Bildelement kann also ein Bildpunkt (Pixel) im Fall einer zweidimensionalen Darstellung, ein Volumenelement (Voxel) im Fall einer dreidimensionalen Darstellung, ein dynamisches Voxel (Doxel) im Fall der vierdimensionalen Darstellung oder ein höherdimensionales Bildelement im Fall einer höherdimensionalen Darstellung sein.

Jedem Bildelement eines Bildes ist ein Farbwert zugeordnet. Der Farbwert gibt an, wie (z.B. in welcher Farbe) das Bildelement visuell dargestellt werden soll (z.B. auf einem Monitor oder einem Drucker).

Der einfachste Fall ist ein Binärbild, bei dem ein Bildelement entweder weiß oder schwarz dargestellt wird. Üblicherweise steht der Farbwert "0" für "schwarz" und der Farbwert "1" für "weiß".

Bei einem Graustufenbild ist jedem Bildelement eine Graustufe zugeordnet, die von schwarz über eine definierte Zahl von Grauabstufungen bis weiß reicht. Die Graustufen werden auch als Grauwerte bezeichnet. Die Zahl der Abstufungen kann beispielsweise von 0 bis 255 reichen (also 256 Graustufen/Grauwerte umfassen), wobei auch hier der Wert "0" üblicherweise für "schwarz" steht und der höchste Grauwert (in dem vorliegenden Beispiel der Wert 255) für "weiß" steht.

Bei einem Farbbild definiert sich die für ein Bildelement verwendete Kodierung der Farbe unter anderem über den Farbraum und die Farbtiefe. Bei einem Bild, dessen Farbe über den so genannten RGB-Farbraum definiert ist (RGB steht für die Grundfarben Rot, Grün und Blau), sind jedem Bildpunkt drei Farbwerte zugeordnet, ein Farbwert für die Farbe Rot, ein Farbwert für die Farbe Grün und ein Farbwert für die Farbe Blau. Die Farbe eines Bildelements ergibt sich durch Überlagerung (additives Mischen) der drei Farbwerte. Der einzelne Farbwert kann z.B. in 256 unterscheidbare Stufen diskretisiert sein, die Tonwerte genannt werden und üblicherweise von 0 bis 255 reichen. Der Tonwert "0" eines jeden Farbkanals ist üblicherweise die dunkelste Farbnuance. Haben alle drei Farbkanäle den Tonwert 0, erscheint das entsprechende Bildelement schwarz; haben alle drei Farbkanäle den Tonwert 255, erscheint das entsprechende Bildelement weiß.

Unabhängig davon, ob es sich um ein Binärbild, ein Graustufenbild oder ein Farbbild handelt, wird in dieser Offenbarung der Begriff "Farbwert" für die Information verwendet, in welcher Farbe (inkl. den "Farben" "schwarz" und "weiß" sowie allen Grautönen) ein Bildelement dargestellt werden soll. Ein Farbwert kann also ein Tonwert eines Farbkanals sein, ein Grauton sein oder für "schwarz" oder für "weiß" stehen.

Ein Farbwert in einem Bild (insbesondere einer medizinischen Aufnahme) repräsentiert üblicherweise eine Stärke eines physikalischen Signals (s.o.). Es sei angemerkt, dass der "Farbwert" auch ein Wert für das physikalische Signal selbst sein kann.

Es gibt eine Vielzahl an möglichen digitalen Bildformaten und Farbkodierungen. Vereinfachend wird in dieser Beschreibung davon ausgegangen, dass die vorliegenden Bilder Rastergrafiken mit einer spezifischen Zahl an Bildelementen sind. Diese Annahme soll jedoch in keiner Weise limitierend verstanden werden. Dem Fachmann der Bildbearbeitung ist klar, wie er die Lehre dieser Beschreibung auf Bilddateien, die in anderen Bildformaten vorliegen und/oder bei denen die Farbwerte anders kodiert sind, übertragen kann.

Bei einem "Bild" im Sinne der vorliegenden Offenbarung kann es sich auch um einen oder mehrere Ausschnitte aus einer Videosequenz handeln.

In einem ersten Schritt wird mindestens ein Bild eines Untersuchungsbereichs eines Untersuchungsobjekts empfangen.

Der Begriff "Empfangen" umfasst sowohl das Abrufen von Bildern als auch das Entgegennehmen von Bildern, die z.B. an das Computersystem der vorliegenden Offenbarung übermittelt werden. Das mindestens eine Bild kann von einem Computertomografen, von einem Magnetresonanztomografen, von einem Ultraschall-Scanner, von einer Kamera und/oder von einem anderen Gerät zur Erzeugung von Bildern empfangen werden. Das mindestens eine Bild kann aus einem Datenspeicher ausgelesen und/oder von einem separaten Computersystem übermittelt werden.

Vorzugsweise handelt es sich bei dem mindestens einen empfangenen Bild um eine zweidimensionale oder dreidimensionale Repräsentation eines Untersuchungsbereichs eines Untersuchungsobjekts.

In einer Ausführungsform der vorliegenden Offenbarung handelt es sich bei dem mindestens einen empfangenen Bild um eine medizinische Aufnahme.

Eine "medizinische Aufnahme" ist eine visuelle Repräsentation eines Untersuchungsbereichs eines Menschen oder eines Tieres, die für diagnostische und/oder therapeutische Zwecke verwendet werden kann.

Es gibt eine Vielzahl an Techniken, mit denen medizinische Aufnahmen erzeugt werden können; Beispiele solcher Techniken sind Röntgen, Computertomografie (CT), Fluoroskopie, Magnetresonanztomografie (MRT), Ultraschall (Sonografie), Endoskopie, Elastografie, taktile Bildgebung, Thermografie, Mikroskopie, Positronenemissionstomografie, optische Kohärenztomografie (OCT), Fundusfotografie und andere.

Beispiele für medizinische Aufnahmen sind CT-Aufnahmen, Röntgenbilder, MRT-Aufnahmen, Fluoreszenzangiografie-Bilder, OCT-Aufnahmen, histologische Aufnahmen, Ultraschallbilder, Fundusbilder und/oder andere.

Das mindestens eine empfangene Bild kann eine CT-Aufnahme, MRT-Aufnahme, Ultraschallaufnahme, OCT-Aufnahme, und/oder eine andere Repräsentation eines Untersuchungsbereichs eines Untersuchungsobjekts sein.

Das mindestens eine empfangene Bild kann auch Repräsentationen unterschiedlicher Modalitäten umfassen, z.B. eine CT-Aufnahme und eine MRT-Aufnahme.

Jedes empfangene Bild umfasst eine Vielzahl an Bildelementen. Jedes Bildelement der Vielzahl an Bildelementen repräsentiert einen Teilbereich des Untersuchungsbereichs des Untersuchungsobjekts.

Der Begriff "Vielzahl an Bildelementen" bedeutet mindestens 1000, vorzugsweise mindestens 10000, noch mehr bevorzugt mehr als 100000. Es ist denkbar, dass ein empfangenes Bild ein oder mehrere Bildelemente umfasst, die nicht den Untersuchungsbereich des Untersuchungsobjekts repräsentieren, sondern einen anderen Bereich wie beispielsweise einen angrenzenden und/oder umgebenden Bereich.

In einem weiteren Schritt wird von dem mindestens einen empfangenen Bild eine Mehrzahl an synthetischen Bildern erzeugt. Der Begriff "Mehrzahl an synthetischen Bildern" bedeutet mindestens zwei, vorzugsweise mindestens fünf, noch mehr bevorzugt mindestens zehn unterschiedliche, synthetische Bilder.

Der Begriff "unterschiedlich" bedeutet, dass die Mehrzahl an synthetischen Bildern keine synthetischen Bilder umfasst, die identisch sind. Mit anderen Worten: zwei willkürlich aus der Mehrzahl der unterschiedlichen synthetischen Bilder herausgegriffene synthetische Bilder sind niemals identisch, sondern unterscheiden sich voneinander.

Die Mehrzahl an synthetischen Bildern wird mittels eines generativen Modells erzeugt, wobei jedes synthetische Bild mit einer unterschiedlichen Variante des generativen Modells erstellt wird.

Jede Variante des generativen Modells ist konfiguriert, auf Basis des mindestens einen empfangenen Bildes des Untersuchungsbereichs des Untersuchungsobjekts ein synthetisches Bild des Untersuchungsbereichs des Untersuchungsobjekts zu erzeugen.

Im Folgenden bezieht sich der Begriff "das synthetische Bild" oder "ein synthetisches Bild" auf jedes einzelne der Mehrzahl an synthetischen Bildern.

Das mindestens eine empfangene Bild kann beispielsweise eine radiologische Aufnahme des Untersuchungsbereichs ohne Kontrastmittel und/oder mit einer geringeren Menge an Kontrastmittel als die Standardmenge des Kontrastmittels umfassen, und das synthetische Bild kann eine synthetische radiologische Aufnahme des Untersuchungsbereichs nach der Applikation der Standardmenge an Kontrastmittel sein (wie z.B. in WO2019/074938A1 oder WO2022184297A1 beschrieben). Die "Standardmenge" ist üblicherweise die vom Hersteller und/oder Vertreiber des Kontrastmittels empfohlene und/oder die von einer Zulassungsbehörde zugelassene und/oder die in einem Beipackzettel zum Kontrastmittel aufgeführte Menge. Das generative Modell ist in einem solchen Fall also konfiguriert, auf Basis mindestens einer radiologischen Aufnahme des Untersuchungsbereichs vor und/oder nach einer Applikation einer ersten Menge eines Kontrastmittels, eine synthetische radiologische Aufnahme nach der Applikation einer zweiten Menge des Kontrastmittels zu erzeugen, wobei die zweite Menge vorzugsweise größer als die erste Menge ist (wie z.B. beschrieben in WO2019/074938A1 oder WO2022184297A1). Die mindestens eine empfangene radiologische Aufnahme kann beispielsweise eine MRT-Aufnahme sein, und die synthetische radiologische Aufnahme kann eine synthetische MRT-Aufnahme sein.

Das mindestens eine empfangene Bild kann auch eine CT-Aufnahme vor und/oder nach der Applikation einer ersten Menge eines MRT-Kontrastmittels umfassen, und die synthetische Repräsentation kann eine synthetische CT-Aufnahme nach der Applikation einer zweiten Menge eines MRT-Kontrastmittels sein, wobei die zweite Menge vorzugsweise größer als die erste Menge und vorzugsweise größer als die Standardmenge des MRT-Kontrastmittels für MRT-Untersuchungen ist (wie z.B. beschrieben in PCT/EP2023/053324).

Das mindestens eine empfangene Bild kann beispielsweise eine oder mehrere radiologische Aufnahmen des Untersuchungsbereichs in einer ersten Zeitspanne vor/und oder nach der Applikation eines Kontrastmittels umfassen, und das synthetische Bild kann eine synthetische radiologische Aufnahme des Untersuchungsbereichs in einer zweiten Zeitspanne nach der Applikation des Kontrastmittels sein (wie z.B. beschrieben in WO2021052896A1). Das generative Modell kann also konfiguriert sein, auf Basis mindestens einer radiologischen Aufnahme des Untersuchungsbereichs in einer ersten Zeitspanne vor und/oder nach der Applikation eines Kontrastmittels eine synthetische radiologische Aufnahme des Untersuchungsbereichs in einer zweiten Zeitspanne nach der Applikation des Kontrastmittels zu erzeugen, wobei die zweite Zeitspanne vorzugsweise chronologisch auf die erste Zeitspanne folgt (wie z.B. beschrieben in WO2021052896A1).

Das generative Modell kann ein Modell des maschinellen Lernens sein. Das generative Modell kann einen oder mehrere Algorithmen umfassen, die angeben, wie das synthetische Bild auf Basis des mindestens einen empfangenen Bildes erzeugt werden kann. Üblicherweise wird das mindestens eine empfangene Bild dem generativen Modell zugeführt und das Modell erzeugt auf Basis des zugeführten mindestens einen Bildes, Modellparametern und gegebenenfalls weiteren Eingabedaten das synthetische Bild (siehe z.B. WO2019/074938A1, WO2022184297A1, WO2021052896A1, PCT/EP2023/053324).

Die Mehrzahl an synthetische Bildern des Untersuchungsbereichs des Untersuchungsobjekts wird auf Basis von empfangenen, vorzugsweise gemessenen Bildern mittels eines generativen Modells erzeugt, wobei jedes synthetische Bild mit einer unterschiedlichen Variante des generativen Modells erzeugt wird. Unterschiedliche Varianten des generativen Modells können durch die Anwendung verschiedener Techniken erreicht werden. Eine Ausführungsform zur Bereitstellung unterschiedlicher Varianten des generativen Modells umfasst die Anwendung der "Dropout"-Technik.

Generative Modelle, Modelle des maschinellen Lernens wie z.B. große neuronale Netze, die auf relativ kleinen Datensätzen trainiert werden, können zu einer Überanpassung ("overfitting") der Trainingsdaten führen. "Dropout" ist eine Regularisierungsmethode, die dem parallelen Training einer großen Anzahl generativer Modelle wie z.B. neuronaler Netze mit unterschiedlichen Architekturen nahekommt.

Bei der üblichen Anwendung von Dropouts werden während des Trainings eines Modells einige Teile des Modells (z.B. Knoten und/oder Schichtausgaben) zufällig oder nach vorgegebenen Regeln ignoriert, "ausgeschaltet" oder "ausgelassen". Beispielsweise können Aktivierungen von Knoten eines neuronalen Netzes auf Null gesetzt werden, so dass die entsprechenden Knoten unabhängig von den Eingangswerten stets den Ausgangswert Null liefern.

Der Anteil an ausgeschalteten Einheiten kann vordefiniert oder in definierten Grenzen variabel sein. Er kann beispielsweise 0,1%, 0,2%, 0,3%, 0,4%, 0,5%, 0,6%, 0,7%, 0,8%, 1,0%, 1,2%, 2%, 5% oder einen anderen Wert betragen. Ausgeschaltete Einheiten können über das gesamte neuronale Netz verteilt sein; ausgeschaltete Einheiten können aber auch auf vordefinierte Schichten beschränkt sein, wie beispielsweise auf vollständig verknüpfte Schichten *(fully connected layers)* und/oder Faltungsschichten *(convolutional layers)* und/oder Bündelungsschichten *(pooling layers)* und/oder andere Schichten/Einheiten. Vorzugsweise werden keine Knoten in der Eingabeschicht/den Eingabeschichten und in der Ausgabeschicht/den Ausgabeschichten ausgeschaltet.

Die Anwendung der Dropout-Technik führt zu generativen Modellen unterschiedlicher Architekturen und/oder Strukturen, also zu unterschiedlichen Varianten eines generativen Modells. So kann im Falle eines neuronalen Netztes das "Ausschalten" oder "Auslassen" einer Ebene dazu führen, dass die Ebene wie eine Ebene mit einer anderen Anzahl von Knoten und einer anderen Konnektivität als die vorherige Ebene aussieht und auch so behandelt werden kann. Durch Ausschalten von verschiedenen Knoten und/oder Ebenen lässt sich eine Vielzahl an Varianten des generativen Modells erzeugen, die sich in ihrer jeweiligen Architektur unterscheiden.

Im Fall der vorliegenden Offenbarung wird Dropout nicht (nur) während des Trainierens eines Modells des maschinellen Lernens verwendet, sondern bei der Verwendung des trainierten Modells zur Erzeugung synthetischer Bilder. Für das Trainieren des Modells kann Dropout verwendet werden; dies ist jedoch nicht erforderlich.

Eine bevorzugte Ausführungsform zur Erstellung unterschiedlicher Varianten des generativen Modells ist Monte Carlo Dropout (Gal, Y, Ghahramani, Z., "Dropout as a Bayesian Approximation: Representing Model Uncertainty in Deep Learning", Proceedings of the 33rd International Conference on Machine Learning, New York, NY, USA, 2016. JMLR: W&CP volume 48, doi: https://doi.org/10.48550/arXiv.1506.02142).

Diese Dropout-Methode wird typischerweise beim Training eines Modells verwendet. Ein entscheidender Vorteil der Monte-Carlo-Dropout-Methode besteht darin, dass sie bei der Verwendung des trainierten Modells zum Erzeugen synthetischer Bilder angewendet werden kann. Es ist möglich, ein Modell (z.B. ein neuronales Netzwerk) mit der regulären Dropout-Methode zu trainieren und das Dropout bei der Verwendung des trainierten Modells eingeschaltet zu halten. Auf diese Weise können unterschiedliche Varianten eines generativen Modells erstellt werden. Entscheidend ist es, dass die Monte-Carlo-Dropout-Methode auch auf bereits trainierte Modelle angewendet werden kann. Bei neuronalen Netzen, die die Monte-Carlo-Methode verwenden, können Dropout-Knoten und/oder Dropout-Schichten zufällig über das gesamte neuronale Netz verteilt werden, z. B. am Anfang (z.B. stochastische Maskierung von Eingaben), in frühen Schichten oder in tiefen Schichten. Dies ermöglicht eine erhöhte Flexibilität und Variabilität in der Generierung unterschiedlicher Varianten eines generativen Modells.Aus der erzeugten Mehrzahl an synthetischen Bildern kann ein vereintes synthetisches Bild erzeugt werde. In anderen Worten: die erzeugte Mehrzahl an synthetischen Bildern kann zu einem vereinten synthetischen Bild zusammengeführt werden.

Jedes empfangene Bild umfasst eine Vielzahl an Bildelementen. Jedes Bildelement der Vielzahl an Bildelementen repräsentiert einen Teilbereich des Untersuchungsbereichs des Untersuchungsobjekts. Ebenso umfasst auch jedes synthetische Bild des Untersuchungsbereichs des Untersuchungsobjekts eine Vielzahl an Bildelementen. Üblicherweise repräsentiert jedes Bildelement eines synthetischen Bildes einen Teilbereich des Untersuchungsbereichs des Untersuchungsobjekts.

Es gibt also eine Vielzahl an Teilbereichen des Untersuchungsbereichs des Untersuchungsobjekts die durch ein Bildelement (oder mehrere Bildelemente) des mindestens einen empfangenen Bildes und durch ein Bildelement (oder mehrere Bildelemente) jedes synthetischen Bildes der erzeugten Mehrzahl an synthetischen Bildern repräsentiert werden. Vorzugsweise werden alle Teilbereiche des Untersuchungsbereichs durch ein Bildelement (oder mehrere Bildelemente) des mindestens einen empfangenen Bildes und durch ein Bildelement (oder mehrere Bildelemente) jedes synthetischen Bildes der erzeugten Mehrzahl an synthetischen Bildern repräsentiert.

Bildelemente, die denselben Teilbereich des Untersuchungsbereichs repräsentieren, werden in dieser Offenbarung als miteinander korrespondierende Bildelemente oder kurz korrespondierende Bildelemente bezeichnet. Es können beispielsweise die Bildelemente sein, die dieselben Koordinaten aufweisen, wenn es sich bei dem Bild (und/oder der Modifikation) um eine Rastergrafik handelt.

Werden korrespondierende Bildelemente der erzeugten Mehrzahl an synthetischen Bildern zusammengeführt, so kann ein vereintes synthetisches Bild generiert werden. Dies kann z.B. aufgrund der Farbwerte der korrespondierenden Bildelemente der erzeugten Mehrzahl an synthetischen Bildern durchgeführt werden.

Für jedes k-Tupel korrespondierender Bildelemente der erzeugten synthetischen Bilder werden die Farbwerte ermittelt. Dabei gibt *k* die Zahl der miteinander korrespondierenden Bildelemente an.

Von den Farbwerten kann ein Mittelwert (z.B. arithmetisches Mittel, geometrisches Mittel, quadratisches Mittel oder ein anderer Mittelwert) berechnet werden. Der Mittelwert der Farbwerte für ein Tupel korrespondierender Bildelemente kann als der Farbwert des entsprechenden Bildelements des vereinten synthetischen Bildes gesetzt werden.

Im Fall von mehreren Farbwerten (z.B. drei Farbwerten wie beim RGB-Farbwerten) kann für jeden Farbkanal ein Mittelwert gebildet werden. Der jeweilige Mittelwert kann dann als der Farbwert des entsprechenden Farbkanals des korrespondierenden Bildelements des vereinten synthetischen Bildes gesetzt werden.

Es ist auch denkbar, für korrespondierende Bildelemente keinen Mittelwert, sondern einen maximalen oder minimalen Farbwert zu ermitteln, und das vereinte synthetische Bild aus den Bildelementen mit den jeweiligen maximalen oder minimalen Farbwerten zusammenzusetzen. Anstelle der MaximalMinima können auch andere statistische Größen ermittelt und zum Erzeugen des vereinten synthetischen Bildes verwendet werden.

Weitere Möglichkeiten, die einzelnen synthetischen Bilder zu einem vereinten synthetischen Bild zu kombinieren, sind denkbar. So kann beispielsweise ein Modell des maschinellen Lernens (z.B. ein künstliches neuronales Netzwerk) trainiert werden, das vereinte synthetische Bild nach vorgegebenen Gesichtspunkten aus den synthetischen Bildern der Mehrzahl an synthetischen Bildern zu erzeugen. Sind Trainingsdaten vorhanden, die neben synthetischen Bildern als Eingabedaten auch Bilder umfassen, die als Zieldaten verwendet werden können, kann das Modell des maschinellen Lernens in einem überwachten Lernverfahren trainiert werden, synthetische Bilder einer Mehrzahl an synthetischen Bildern zu kombinieren. Dabei können beispielsweise Aufmerksamkeitsmechanismen (engl. *attention)* verwendet werden, bei denen beispielsweise den einzelnen synthetischen Bildern der Mehrzahl an synthetischen Bildern unterschiedliche Gewichte bei der Kombination zu dem vereinten synthetischen Bild zugeordnet werden.

Das vereinte synthetische Bild kann ausgegeben (z.B. auf einem Monitor angezeigt und/oder auf einem Drucker ausgegeben) und/oder in einem Datenspeicher gespeichert und/oder an ein separates Computersystem z.B. über eine Netzwerkverbindung übermittelt werden.

Es ist auch möglich, mehr als ein vereintes synthetisches Bild zu erzeugen. Es können auch verschiedene vereinte synthetische Bilder durch die Anwendung verschiedener Methoden erzeugt werden. Es ist auch möglich, dass mehr als ein vereintes synthetisches Bild erzeugt wird, z.B. zwei oder drei oder vier oder mehr als vier. Es kann zum Beispiel ein erstes vereintes synthetisches Bild mit den jeweiligen Maxima der Farbwerte erzeugt werden und ein zweites vereintes synthetisches Bild mit den jeweiligen Minima der Farbwerte. Es kann auch ein drittes vereintes synthetisches Bild mit Mittelwerten der Farbwerte erzeugt werden.

Es ist auch möglich, dass kein vereintes synthetisches Bild erzeugt und/oder ausgegeben wird. Es ist möglich, dass die nachfolgend beschriebene Analyse korrespondierender Bildelemente synthetischer Bilder ergibt, dass ein vereintes synthetisches Bild eine geringe Vertrauenswürdigkeit aufweist. Zum Beispiel kann ein ermittelter Vertrauenswert, der positiv mit der Vertrauenswürdigkeit korreliert, geringer als ein vordefinierter Grenzwert sein. Es kann sein, dass der ermittelte Vertrauenswert und damit die Vertrauenswürdigkeit so gering ist, dass auf Basis des vereinten synthetischen Bildes keine Diagnose erstellt und/oder Therapiemaßnahmen initiiert werden sollten. In einem solchen Fall kann es sein, dass ein vereintes synthetisches Bild wertlos oder sogar irreführend und damit gefährlich ist. Auf die Erzeugung und/oder Ausgabe eines solchen vereinten synthetischen Bildes mit einer geringen Vertrauenswürdigkeit kann dann verzichtet werden.

In einem weiteren Schritt wird ein Vertrauenswert ermittelt. Die Mehrzahl an synthetischen Bildern wird erzeugt, um einen Vertrauenswert zu ermitteln. Der in dieser Offenbarung beschriebene Vertrauenswert kann ein Vertrauenswert für ein mittels einer Variante des generativen Modells erzeugtes einzelnes synthetisches Bild oder für mehrere mittels verschiedener Varianten des generativen Modells erzeugte synthetische Bilder sein. Der in dieser Offenbarung beschriebene Vertrauenswert kann auch ein Vertrauenswert für ein vereintes synthetisches Bild sein, das auf Basis der Mehrzahl an synthetischen Bildern erzeugt wird.

Der mindestens eine Vertrauenswert kann ein Wert sein, der angibt, inwieweit man einem synthetischen Bild (z.B. einem der Mehrzahl an generierten synthetischen Bildern oder einem synthetischen (Gesamt)Bild, also einem vereinten synthetischen Bild, das sich aus der Kombination der Einzelbilder aus der Mehrzahl an synthetischen Bildern ergibt) vertrauen kann.

Der Vertrauenswert kann positiv mit der Vertrauenswürdigkeit des synthetischen Bildes korrelieren, d.h., wenn der Vertrauenswert gering ist, ist auch die Vertrauenswürdigkeit gering und wenn der Vertrauenswert hoch ist, ist auch die Vertrauenswürdigkeit hoch. Es ist aber auch möglich, dass der Vertrauenswert negativ mit der Vertrauenswürdigkeit korreliert; d.h., wenn der Vertrauenswert gering ist, ist die Vertrauenswürdigkeit hoch und wenn der Vertrauenswert hoch ist, ist die Vertrauenswürdigkeit gering. Bei einer negativen Korrelation kann man anstelle des Vertrauenswerts auch von einem Unsicherheitswert sprechen: ist der Unsicherheitswert hoch, dann geht von dem synthetischen Bild eine hohe Unsicherheit aus; es ist möglich, dass das synthetische Bild ein oder mehrere Artefakte aufweist; es ist möglich, dass für Strukturen und/oder Morphologien und/oder Texturen in dem synthetischen Bild keine Entsprechung in der Realität existiert, d.h., dass Strukturen und/oder Morphologien und/oder Texturen in dem synthetischen Bild nicht auf reale Strukturen und/oder reale Morphologien und/oder reale Texturen im Untersuchungsbereich zurückgeführt werden können. Ein geringer Unsicherheitswert hingegen zeigt an, dass das synthetische Bild eine geringe Unsicherheit aufweist; Merkmale in dem synthetischen Bild haben eine Entsprechung in der Realität; dem synthetischen Bild kann vertraut werden; eine medizinische Diagnose kann auf Basis des synthetischen Bildes gestellt und/oder eine medizinische Therapie kann auf Basis des synthetischen Bildes initiiert werden.

Ein Vertrauenswert, der positiv mit der Vertrauenswürdigkeit korreliert, kann prinzipiell auch in einen Vertrauenswert, der negativ mit der Vertrauenswürdigkeit korreliert (einen Unsicherheitswert), umgewandelt werden, beispielsweise, indem man das Reziproke (den Kehrwert) bildet. Umgekehrt kann entsprechend auch ein Vertrauenswert, der negativ mit der Vertrauenswürdigkeit korreliert (ein Unsicherheitswert), in einen Vertrauenswert, der positiv mit der Vertrauenswürdigkeit korreliert, umgewandelt werden.

Der mindestens eine Vertrauenswert kann auf Basis korrespondierender Bildelemente synthetischer Bilder ermittelt werden, vorzugsweise auf Basis eines Vergleichs korrespondierender Bildelemente von zwei oder mehr der erzeugten Mehrzahl an synthetischen Bildern. Es gibt unterschiedliche Eigenschaften korrespondierender Bildelemente, die miteinander verglichen werden können, um den Vertrauenswert zu ermitteln.

Eine solche Möglichkeit zur Bestimmung des Vertrauenswertes ist anhand der Farbwerte korrespondierender Bildelemente. Die unterstehenden Erklärungen zur Bestimmung eines Vertrauenswertes anhand der Farbwerte korrespondierender Bildelemente kann auch auf andere Parameter angewendet werden, die zur Bestimmung des Vertrauenswertes geeignet sein könnten.

Für jedes k-Tupel korrespondierender Bildelemente der erzeugten Mehrzahl an synthetischen Bildern können die Farbwerte ermittelt werden. Dabei gibt *k* die Zahl der miteinander korrespondierenden Bildelemente an.

Je mehr sich die Farbwerte korrespondierender Bildelemente in den synthetischen Bildern voneinander unterscheiden, desto größer ist die Unsicherheit. Die Vertrauenswürdigkeit ist umso geringer, je größer die Unterschiede bei den Farbwerten korrespondierender Bildelemente sind.

Daher kann das Ausmaß, in dem sich Farbwerte korrespondierender Bildelemente unterscheiden, als Maß für die Vertrauenswürdigkeit/Unsicherheit verwendet werden: je mehr sich Farbwerte korrespondierender Bildelemente unterscheiden, desto geringer ist die Vertrauenswürdigkeit, desto höher ist die Unsicherheit; je weniger sich Farbwerte korrespondierender Bildelemente unterscheiden, desto geringer ist die Unsicherheit, desto höher ist die Vertrauenswürdigkeit.

Die Vertrauenswürdigkeit/Unsicherheit kann also für jedes Tupel korrespondierender Bildelemente synthetischer Bilder der Mehrzahl an synthetischen Bildern ermittelt werden und repräsentiert dann die Vertrauenswürdigkeit/Unsicherheit (i) jedes einzelnen synthetischen Bildes der Mehrzahl an synthetischen Bildern, (ii) der Gesamtheit der synthetischen Bilder der Mehrzahl an synthetischen Bildern und (iii) des vereinten synthetischen Bildes.

Mit anderen Worten: es lässt sich für jedes einzelne Bildelement des vereinten synthetischen Bildes und/oder jedes synthetischen Bildes der Mehrzahl an synthetischen Bildern ein Vertrauenswert ermitteln, der angibt, wie sehr man dem Farbwert des Bildelements vertrauen kann.

Ein solcher Vertrauenswert kann beispielsweise die Streubreite des Tupels korrespondierender Bildelemente sein. Die Streubreite ist definiert als die Differenz zwischen dem größten Wert und dem kleinsten Wert einer Variable. Es kann also für jedes Tupel korrespondierender Bildelemente ein maximaler Farbwert und ein minimaler Farbwert ermittelt und die Differenz zwischen dem maximalen und dem minimalen Farbwert gebildet werden. Das Ergebnis ist die Streubreite der Farbwerte des Tupels korrespondierender Bildelemente, die als Vertrauenswert verwendet werden kann.

Gibt es mehr als einen Farbwert (zum Beispiel drei Farbwerte, wie im Fall von Bildern, deren Farbwerte gemäß dem RGB-Farbmodell spezifiziert sind), kann für jeden Farbkanal ein maximaler und ein minimaler Farbwert ermittelt und die Differenz für jeden Farbkanal gebildet werden. Es ergeben sich drei Streubreiten. Es kann für jeden Farbkanal die jeweilige Streubreite als ein eigener Vertrauenswert verwendet werden; es ist aber auch möglich, die Streubreiten der Farbkanäle zu einem einzigen Wert zu kombinieren; es ist möglich, die maximale Streubreite als Vertrauenswert zu verwenden; es ist möglich einen Mittelwert (z.B. das arithmetische Mittel, das geometrische Mittel, das quadratische Mittel oder einen anderen Mittelwert) der Streubreiten als Vertrauenswert zu verwenden; es ist möglich, die Länge des Vektors, den die Streubreiten in einem dreidimensionalen Raum (oder einem höherdimensionalen Raum bei Verwendung von mehr als drei Farbkanälen) spezifizieren, als Vertrauenswert zu verwenden; weitere Möglichkeiten sind denkbar.

Ein Vertrauenswert für ein Tupel korrespondierender Bildelemente kann auch die Varianz und/oder die Standardabweichung der Farbwerte der korrespondierenden Bildelemente sein. Die Varianz ist definiert als die mittlere quadratische Abweichung einer Variablen von ihrem Erwartungswert; die Standardabweichung ist definiert als die Quadratwurzel der Varianz.

Ein Vertrauenswert kann auch ein anderes Streuungsmaß sein, wie beispielweise die Summe der Abweichungsquadrate, der Variationskoeffizient, die mittlere absolute Abweichung, ein Quantilsabstand, ein Interquantilsabstand, der mittlere absolute Abstand vom Median, der Median der absoluten Abweichungen und/oder die geometrische Standardabweichung. Es ist auch möglich, dass es mehr als einen Vertrauenswert für ein Tupel korrespondierender Bildelemente gibt.

Die für Tupel korrespondierender Bildelemente ermittelten Vertrauenswerte können ausgegeben (z.B. auf einem Monitor angezeigt oder auf einem Drucker ausgedruckt), in einem Datenspeicher gespeichert und/oder an ein separates Computersystem z.B. über ein Netzwerk übermittelt werden.

Die für Tupel korrespondierender Bildelemente ermittelten Vertrauenswerte können auch bildhaft dargestellt werden.

Neben dem vereinten synthetischen Bild kann also eine weitere Repräsentation des Untersuchungsbereichs ausgegeben (z.B. auf einem Monitor angezeigt) werden, in der für jedes Bildelement angezeigt wird, wie vertrauenswürdig es ist. Eine solche Repräsentation wird in dieser Beschreibung auch als Vertrauensrepräsentation bezeichnet. Die Vertrauensrepräsentation hat vorzugsweise die gleiche Dimension und Größe wie das vereinte synthetische Bild; jedem Bildelement des vereinten synthetischen Bildes ist vorzugsweise ein Bildelement in der Vertrauensrepräsentation zugeordnet.

Anhand einer solchen Vertrauensrepräsentation kann ein Nutzer (z.B. ein Arzt) für jedes einzelne Bildelement erkennen, wie weit er dem Farbwert des Bildelements vertrauen kann. Es ist möglich, die Vertrauensrepräsentation mit dem vereinten synthetischen Bild ganz oder teilweise überlagert darzustellen. Es ist möglich, die überlagerte Darstellung so zu gestalten, dass der Nutzer sie ein- und ausblenden kann. Der Nutzer kann sich das vereinte synthetische Bild beispielsweise Schicht für Schicht anzeigen lassen, so wie es für computertomografische-, magnetresonanztomografische und andere dreioder höherdimensionale Repräsentationen üblich ist. Bei jeder Schicht kann er die entsprechende Schicht der Vertrauensrepräsentation einblenden lassen, um zu prüfen, ob Bildelemente in der Schicht, die Strukturen, Morphologien und/oder Texturen zeigen, vertrauenswürdig oder unsicher sind. Auf diese Weise kann der Nutzer erkennen, wie hoch das Risiko ist, dass es sich bei den Strukturen, Morphologien und/oder Texturen um reale Eigenschaften des Untersuchungsbereichs oder um Artefakte handelt.

Bildelemente mit einer geringen Vertrauenswürdigkeit (mit einer hohen Unsicherheit) können beispielsweise hell und/oder mit einer Signalfarbe (z.B. rot oder orange oder gelb) dargestellt werden, während Bildelemente mit einer hohen Vertrauenswürdigkeit (mit einer geringen Unsicherheit) dunkel oder mit einer unauffälligeren oder beruhigenden Farbe (z.B. grün oder blau) dargestellt werden können. Es ist auch möglich, dass nur diejenigen Bildelemente bei einer Überlagerung dargestellt werden, bei denen der Vertrauenswert einen vordefinierten Grenzwert über- oder unterschreitet. Korreliert der Vertrauenswert positiv mit der Vertrauenswürdigkeit können beispielsweise nur diejenigen Bildelemente der Vertrauensrepräsentation dargestellt werden, deren Vertrauenswert unterhalb eines vordefinierten Grenzwerts liegt; in einem solchen Fall werden einem Nutzer (z.B. einem Arzt) nur diejenigen Bildelemente zur Kenntnis gegeben, denen er eher nicht vertrauen sollte.

Es ist auch möglich, dass Vertrauenswerte für Teilbereiche des vereinten synthetischen Bildes (z.B. Schichten innerhalb des jeweiligen synthetischen Bildes) und/oder für das gesamte vereinte synthetische Bild ermittelt werden. Eine Ermittlung solcher Vertrauenswerte für Teilbereiche oder gesamte Bilder kann auf Basis der Vertrauenswerte derjenigen Bildelemente erfolgen, aus denen sie zusammengesetzt sind. Zur Ermittlung eines Vertrauenswerts einer Schicht können beispielsweise alle Vertrauenswerte derjenigen Bildelemente berücksichtigt werden, die in dieser Schicht liegen. Es ist aber auch möglich, auch benachbarte Bildelemente (zum Beispiel Bildelemente der Schicht über und/oder unter betrachtete Schicht) zu berücksichtigen. Ein Vertrauenswert für einen Teilbereich oder den gesamten Bereich kann beispielsweise durch Mittelwertbildung (z.B. arithmetischer Mittelwert, geometrisches Mittel, quadratische Mittel oder einen anderen Mittelwert) ermittelt werden. Es ist auch möglich, den Maximalwert (z.B. bei einem Vertrauenswert, der negativ mit der Vertrauenswürdigkeit korreliert) oder den Minimalwert (z.B. bei einem Vertrauenswert, der negativ mit der Vertrauenswürdigkeit korreliert) der Vertrauenswerte der Bildelemente eines Teilbereichs oder des Gesamtbereichs zu ermitteln und diesen als Vertrauenswert des Teilbereichs oder des Gesamtbereichs zu verwenden. Weitere Möglichkeiten, einen Vertrauenswert für einen Teilbereich oder den Gesamtbereich auf Basis der Vertrauenswerte einzelner Bildelemente zu ermitteln, sind denkbar.

Eine solcher Vertrauenswert für einen Teilbereich oder den Gesamtbereich kann ebenfalls ausgegeben (z.B. auf einem Monitor angezeigt oder auf einem Drucker ausgegeben), in einem Datenspeicher gespeichert und/oder an ein separates Computersystem übermittelt werden. Er kann auch, wie für die einzelnen Vertrauenswerte beschrieben, bildhaft (z.B. farblich) dargestellt werden.

Ist ein positiv mit der Vertrauenswürdigkeit korrelierender Vertrauenswert für einen Teilbereich oder den Gesamtbereich geringer als ein vordefinierter Grenzwert, dann ist es möglich, dass dem entsprechenden Teilbereich oder Gesamtbereich kein Vertrauen geschenkt werden sollte. Es ist möglich, dass ein solcher Teilbereich oder der entsprechende Gesamtbereich wie oben beschrieben gar nicht ausgegeben (z.B. gar nicht angezeigt) wird, oder dass er mit einem Warnhinweis angezeigt wird, dass ein Nutzer bei der Interpretation der angezeigten Daten vorsichtig sein sollte, da die angezeigten Daten unsicher sind.

Die Erfindung wird nachstehend anhand von Zeichnung näher erläutert, ohne die Erfindung auf die in den Zeichnungen dargestellten Merkmale und Merkmalskombinationen beschränken zu wollen. Aussagen, die in Bezug auf die in den Zeichnungen gezeigten Bilder getätigt werden, sollen allgemein gelten, d.h. analog auch auf andere Ausführungsformen anwendbar sein und nicht auf die gezeigten Ausführungsform beschränkt sein.

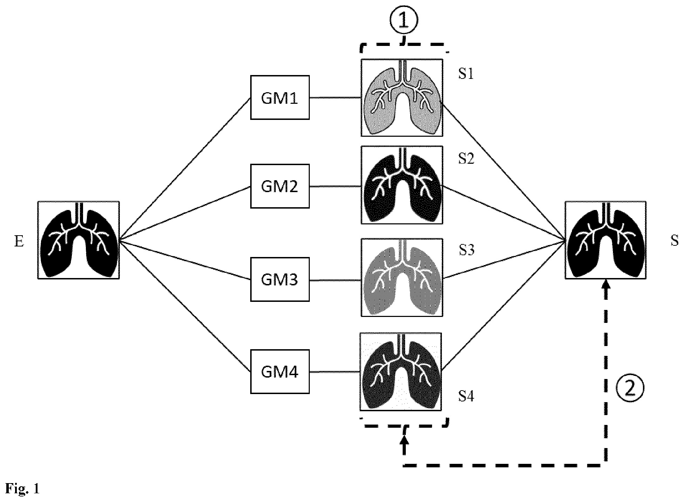

Fig. 1 zeigt beispielhaft und schematisch das Verfahren zum Erzeugen eine Mehrzahl an synthetischen Bildern und eines vereinten synthetischen Bildes sowie die Möglichkeiten zur Bestimmung eines Vertrauenswertes. Das empfangene Bild (E) stellt einen Untersuchungsbereich eines Untersuchungsobjekts dar. Durch die Anwendung unterschiedlicher Varianten eines generativen Modells (GM1, GM2, GM3, GM4 ... GMn) kann eine Mehrzahl an synthetischen Bildern des Untersuchungsbereichs des Untersuchungsobjekts (S1, S2, S3, S4 ... Sn) erzeugt werden sowie ein vereintes synthetisches Bild (S). Ein Vertrauenswert kann auf Basis des Vergleichs korrespondierender Bildelemente von zwei oder mehr der erzeugten Mehrzahl an synthetischen Bildern (①, ②) ermittelt werden.

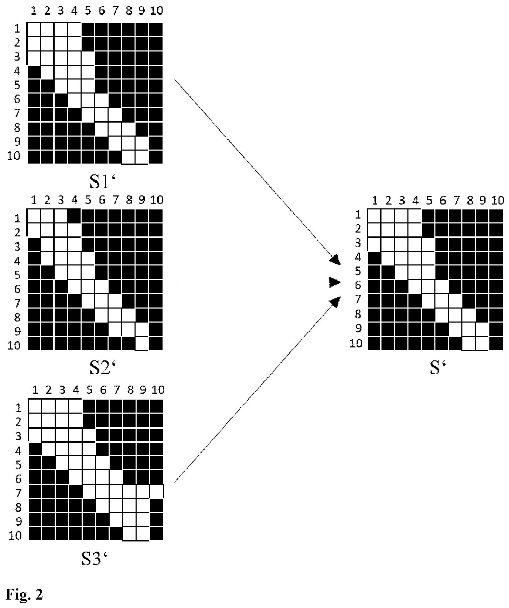

Fig. 2 zeigt beispielhaft und schematisch das Kombinieren von synthetischen Bildern zu einem vereinten synthetischen Bild.

Es sind drei synthetische Bilder S1', S2' und S3' dargestellt. Die drei synthetischen Bilder können beispielsweise vergrößerte Ausschnitte der in Fig. 1 gezeigten synthetischen Bilder S1, S2 und S3 sein.

Jedes der drei synthetischen Bilder S1', S2' und S3' weist eine Zahl von 10 · 10 = 100 Bildelementen auf. Die Bildelemente sind rasterförmig angeordnet; jeder Zeile und jeder Spalte ist eine Ziffer zugeordnet, so dass jedes Bildelement durch seine Koordinaten (Zeilenwert, Spaltenwert) eindeutig angegeben werden kann.

Bei den synthetischen Bildern S1', S2' und S3' handelt es sich um Binärbilder, d.h. jedem Bildelement ist entweder der Farbwert "weiß" oder der Farbwert "schwarz" zugeordnet.

Das vereinte synthetische Bild S' wird durch Kombinieren der synthetischen Bildern S 1 `, S2' und S3' erzeugt. Das Kombinieren erfolgt auf Basis von korrespondierenden Bildelementen. Korrespondierende Bildelemente repräsentieren jeweils denselben Teilbereich des Untersuchungsbereich des Untersuchungsobjekts. Im vorliegenden Beispiel stimmen die Koordinaten korrespondierender Bildelemente überein. Das Bildelement mit den Koordinaten (1,1) des synthetischen Bildes S1' korrespondiert beispielsweise mit dem Bildelement mit den Koordinaten (1,1) des synthetischen Bildes S2' und mit dem Bildelement mit den Koordinaten (1,1) des synthetischen Bildes S3'. Die Bildelemente mit den Koordinaten (1,1) der synthetischen Bilder S1', S2' und S3' bilden ein Tupel korrespondierender Bildelemente.

Für jedes Tupel korrespondierender Bildelemente werden die Farbwerte ermittelt und es wird auf Basis der ermittelten Farbwerte der Farbwert des korrespondierenden Bildelements des vereinten synthetischen Bildes ermittelt.

Im vorliegenden Beispiel werden synthetischen Bilder nach der folgenden Regel zu dem vereinten synthetischen Bild kombiniert: der Farbwert eines jeden Bildelements des vereinten synthetischen Bildes S' entspricht dem Farbwert der Mehrheit der Farbwerte der korrespondierenden Bildelemente der synthetischen Repräsentationen S1', S2' und S3'.

Der Farbwert für das Bildelement mit den Koordinaten (1,1) der synthetischen Repräsentation S 1' ist beispielsweise "weiß". Der Farbwert für das Bildelement mit den Koordinaten (1,1) der korrespondierenden synthetischen Repräsentation S2' ist ebenfalls "weiß". Der Farbwert für das Bildelement mit den Koordinaten (1,1) der korrespondierenden synthetischen Repräsentation S3' ist ebenfalls "weiß". Die Mehrheit der korrespondierenden Bildelemente (nämlich alle Bildelemente) hat den Farbwert "weiß". Dementsprechend wird der Farbwert des Bildelements mit den Koordinaten (1,1) des vereinten synthetischen Bildes ebenfalls auf "weiß" gesetzt.

Der Farbwert für das Bildelement mit den Koordinaten (1,4) der synthetischen Repräsentation S 1' ist beispielsweise "weiß". Der Farbwert für das Bildelement mit den Koordinaten (1,4) der korrespondierenden synthetischen Repräsentation S2' ist "schwarz". Der Farbwert für das Bildelement mit den Koordinaten (1,4) der korrespondierenden synthetischen Repräsentation S3' ist "weiß". Die Mehrheit der korrespondierenden Bildelemente hat den Farbwert "weiß". Dementsprechend wird der Farbwert des Bildelements mit den Koordinaten (1,4) des vereinten synthetischen Bildes auf "weiß" gesetzt.

Der Farbwert für das Bildelement mit den Koordinaten (7,10) der synthetischen Repräsentation S1' ist beispielsweise "schwarz". Der Farbwert für das Bildelement mit den Koordinaten (7,10) der korrespondierenden synthetischen Repräsentation S2' ist ebenfalls "schwarz". Der Farbwert für das Bildelement mit den Koordinaten (7,10) der korrespondierenden synthetischen Repräsentation S3' ist "weiß". Die Mehrheit der korrespondierenden Bildelemente hat den Farbwert "schwarz". Dementsprechend wird der Farbwert des Bildelements mit den Koordinaten (7,10) des vereinten synthetischen Bildes auf "schwarz" gesetzt.

Es gibt zahlreiche weitere Methoden, wie synthetische Bilder zu einem vereinten synthetischen Bild kombiniert werden können.

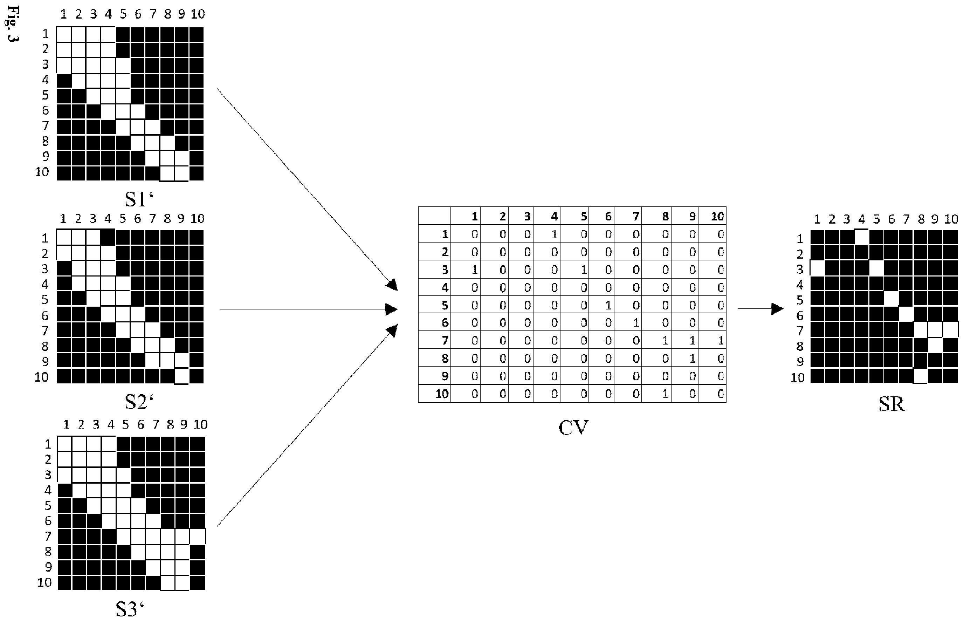

Fig. 3 zeigt beispielhaft und schematisch das Ermitteln des mindestens einen Vertrauenswertes. Das Ermitteln des mindestens einen Vertrauenswerts erfolgt auf Basis korrespondierender Bildelemente der bereits in Fig. 2 gezeigten synthetischen Bilder S1', S2' und S3'.

Es wird für jedes Tupel korrespondierender Bildelemente jeweils ein Vertrauenswert ermittelt. In einem ersten Schritt werden die Farbwerte aller Bildelemente ermittelt. Im vorliegenden Beispiel ist der Farbe "schwarz" wie allgemein üblich der Farbwert "0" und der Farbe "weiß" der Farbwert "1" zugeordnet.

Als Vertrauenswert wird für jedes Tupel korrespondierender Bildelemente der synthetischen Bilder S1 `, S2' und S3' die Streubreite berechnet.

Der Farbwert für das Bildelement mit den Koordinaten (1,1) der synthetischen Repräsentation S 1' ist beispielsweise "1" (weiß). Der Farbwert für das Bildelement mit den Koordinaten (1,1) der korrespondierenden synthetischen Repräsentation S2' ist ebenfalls "1" (weiß). Der Farbwert für das Bildelement mit den Koordinaten (1,1) der korrespondierenden synthetischen Repräsentation S3' ist ebenfalls "1" (weiß). Die Streubreite für das Tupel korrespondierender Bildelemente ist also 1 - 1 = 0.

Der Farbwert für das Bildelement mit den Koordinaten (1,4) der synthetischen Repräsentation S 1' ist beispielsweise "1" (weiß). Der Farbwert für das Bildelement mit den Koordinaten (1,4) der korrespondierenden synthetischen Repräsentation S2' ist "0" (schwarz). Der Farbwert für das Bildelement mit den Koordinaten (1,4) der korrespondierenden synthetischen Repräsentation S3' ist "1" (weiß). Die Streubreite für das Tupel korrespondierender Bildelemente ist also 1 - 0 = 1.

Der Farbwert für das Bildelement mit den Koordinaten (7,10) der synthetischen Repräsentation S1' ist beispielsweise "0" (schwarz). Der Farbwert für das Bildelement mit den Koordinaten (7,10) der korrespondierenden synthetischen Repräsentation S2' ist ebenfalls "0" (schwarz). Der Farbwert für das Bildelement mit den Koordinaten (7,10) der korrespondierenden synthetischen Repräsentation S3' ist "1" (weiß). Die Streubreite für das Tupel korrespondierender Bildelemente ist also 1 - 0 = 1.

Die Vertrauenswerte sind in der Tabelle CV aufgelistet.

Die so ermittelten Vertrauenswerte korrelieren negativ mit der Vertrauenswürdigkeit.

Auf Basis der Vertrauenswerte lässt sich eine Vertrauensrepräsentation ermitteln. In dem in Fig. 3 dargestellten Beispiel wird der Farbwert jedes Bildelements in der Vertrauensrepräsentation SR auf den entsprechenden Vertrauenswert des Tupels korrespondierender Bildelemente gesetzt. So erhält beispielsweise das Bildelement mit den Koordinaten (1,1) in der Vertrauensrepräsentation die Farbe schwarz, während die Bildelemente mit den Koordinaten (1,4) und (7,10) die Farbe weiß erhalten. Anhand der Vertrauensrepräsentation SR kann ein Nutzer (z.B. ein Arzt) sofort erkennen, welche Bildelemente sicher (schwarz) und welche unsicher (weiß) sind. Bereichen, in denen viele weiße Bildelemente in der Vertrauensrepräsentation SR sollte der Nutzer weniger vertrauen.

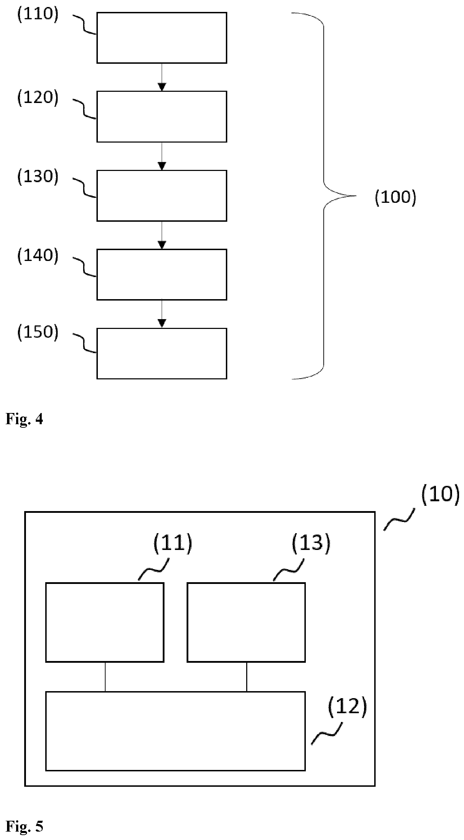

Fig. 4 zeigt eine Ausführungsform des Verfahrens der vorliegenden Offenbarung in Form eines Ablaufschemas.

Das Verfahren (100) umfasst die Schritte:
(110) Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
(120) Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
(130) Ermitteln eines Streuungsmaßes korrespondierender Bildelemente der erzeugten synthetischen Bilder, wobei miteinander korrespondierende Bildelemente denselben Teilbereich des Untersuchungsbereichs repräsentieren,
(140) Ermitteln mindestens eines Vertrauenswertes auf Basis des ermittelten Streuungsmaßes,
(150) Ausgeben des mindestens einen Vertrauenswertes.

Fig. 5 zeigt beispielhaft und schematisch ein Computersystem gemäß der vorliegenden Offenbarung.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Das in Fig. 5 gezeigte Computersystem (10) umfasst eine Empfangseinheit (11), eine Steuer- und Recheneinheit (12) und eine Ausgabeeinheit (13).

Die Steuer- und Recheneinheit (12) dient der Steuerung des Computersystems (10), der Koordinierung der Datenflüsse zwischen den Einheiten des Computersystems (10) und der Durchführung von Berechnungen.

Die Steuer- und Recheneinheit (12) ist konfiguriert:
- die Empfangseinheit (11) zu veranlassen, mindestens ein Bild eines Untersuchungsbereichs eines Untersuchungsobjekts zu empfangen, wobei das mindestens eine Bild eine Vielzahl an Bildelementen umfasst, wobei jedes Bildelement der Vielzahl an Bildelementen einen Teilbereich des Untersuchungsbereichs repräsentiert,
- eine Mehrzahl an synthetischen Bildern des Untersuchungsbereichs des Untersuchungsobjekts auf Basis des empfangenen Bildes mittels eines generativen Modells zu erzeugen, wobei jedes synthetische Bild mit einer unterschiedlichen Variante des generativen Modells erstellt wird,
- ein Streuungsmaß korrespondierender Bildelemente der erzeugten synthetischen Bilder zu ermitteln, wobei miteinander korrespondierende Bildelemente denselben Teilbereich des Untersuchungsbereichs repräsentieren,
- mindestens einen Vertrauenswert auf Basis des ermittelten Streuungsmaßes zu ermitteln,
- die Ausgabeeinheit (13) zu veranlassen, den Vertrauenswert auszugeben.

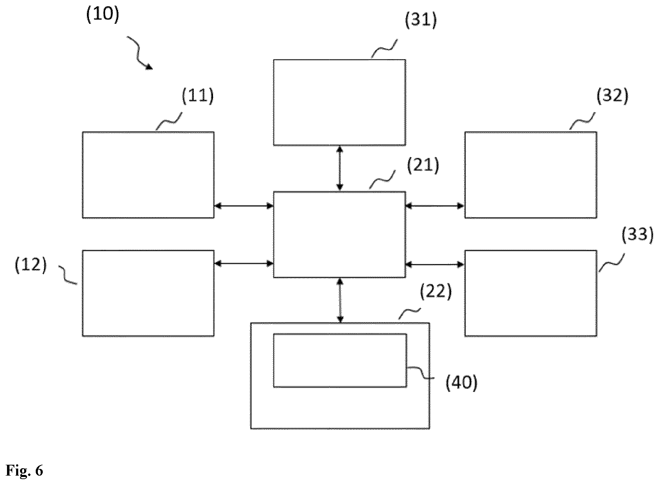

Fig. 6 zeigt beispielhaft und schematisch eine weitere Ausführungsform des Computersystems. Das Computersystem (10) umfasst eine Verarbeitungseinheit (21), die mit einem Speicher (22) verbunden ist. Die Verarbeitungseinheit (21) und der Speicher (22) bilden eine Steuer- und Recheneinheit, wie sie in Fig. 5 gezeigt ist.

Die Verarbeitungseinheit (21) (engl.: *processing unit)* kann einen oder mehrere Prozessoren allein oder in Kombination mit einem oder mehreren Speichern umfassen. Bei der Verarbeitungseinheit (21) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (21) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (21) kann konfiguriert sein, Computerprogramme auszuführen, die in einem Arbeitsspeicher der Verarbeitungseinheit (21) oder im Speicher (22) desselben oder eines anderen Computersystems gespeichert sein können.

Der Speicher (22) kann eine gewöhnliche Computerhardware sein, die in der Lage ist, Informationen wie z.B. digitale Bildaufnahmen (z.B. Repräsentationen des Untersuchungsbereichs), Daten, Computerprogramme und/oder andere digitale Informationen entweder vorübergehend und/oder dauerhaft zu speichern. Der Speicher (22) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher, eine austauschbare Computerdiskette, eine optische Disc, ein Magnetband oder eine Kombination der oben genannten. Zu den optischen Discs können Compact Discs mit Nur-Lese-Speicher (CD-ROM), Compact Discs mit Lese-/Schreibfunktion (CD-R/W), DVDs, Blu-ray-Discs und ähnliche gehören.

Zusätzlich zum Speicher (22) kann die Verarbeitungseinheit (21) auch mit einer oder mehreren Schnittstellen (11, 12, 31, 32, 33) verbunden sein, um Informationen anzuzeigen, zu übertragen und/oder zu empfangen. Die Schnittstellen können eine oder mehrere Kommunikationsschnittstellen (11, 32, 33) und/oder eine oder mehrere Benutzerschnittstellen (12, 31) umfassen. Die eine oder mehrere Kommunikationsschnittstellen können so konfiguriert sein, dass sie Informationen senden und/oder empfangen, z.B. zu und/oder von einer MRT-Scanner, einem CT-Scanner, einer Ultraschallkamera, anderen Computersystemen, Netzwerken, Datenspeichern oder dergleichen. Die eine oder mehrere Kommunikationsschnittstellen können so konfiguriert sein, dass sie Informationen über physische (verdrahtete) und/oder drahtlose Kommunikationsverbindungen übertragen und/oder empfangen. Die eine oder die mehreren Kommunikationsschnittstellen können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen können eine Anzeige (31) umfassen. Eine Anzeige (31) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und dergleichen umfassen.

Ein oder mehrere Computerprogramme (40) können im Speicher (22) gespeichert sein und von der Verarbeitungseinheit (21) ausgeführt werden, die dadurch programmiert wird, die in dieser Beschreibung beschriebenen Funktionen zu erfüllen. Das Abrufen, Laden und Ausführen von Anweisungen des Computerprogramms (40) kann sequenziell erfolgen, so dass jeweils ein Befehl abgerufen, geladen und ausgeführt wird. Das Abrufen, Laden und/oder Ausführen kann aber auch parallel erfolgen.

Das Computersystem der vorliegenden Offenbarung kann als Laptop, Notebook, Netbook und/der Tablet-PC ausgeführt sein, es kann auch ein Bestandteil eines MRT-Scanners, eines CT-Scanners oder eines Ultraschalldiagnosegeräts sein.

## Patentansprüche

1. Computer-implementiertes Verfahren zum Erzeugen mindestens eines Vertrauenswertes für ein synthetisches Bild, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Ermitteln mindestens eines Vertrauenswertes,
- Ausgeben des mindestens einen Vertrauenswertes.

2. Computer-implementiertes Verfahren nach Anspruch 1, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Ermitteln mindestens eines Vertrauenswertes auf Basis der Farbwerte miteinander korrespondierender Bildelemente der erzeugten synthetischen Bilder, wobei miteinander korrespondierende Bildelemente denselben Teilbereich des Untersuchungsbereichs repräsentieren,
- Ausgeben des mindestens einen Vertrauenswertes.

3. Computer-implementiertes Verfahren nach Anspruch 1, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Ermitteln eines Streuungsmaßes korrespondierender Bildelemente der erzeugten synthetischen Bilder, wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

4. Computer-implementiertes Verfahren nach Anspruch 1 oder 3, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Ermitteln eines Streuungsmaßes auf Basis der Farbwerte miteinander korrespondierender Bildelemente der erzeugten synthetischen Bilder, wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

5. Computer-implementiertes Verfahren nach Anspruch 1, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Zusammenführen der Mehrzahl an synthetischen Bildern des Untersuchungsbereichs des Untersuchungsobjekts zu einem aggregierten synthetischen Bild des Untersuchungsbereichs des Untersuchungsobj ekts,
- Ermitteln eines Streuungsmaßes korrespondierender Bildelemente des empfangenen Bildes und des aggregierten synthetischen Bildes, wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

6. Computer-implementiertes Verfahren nach Anspruch 1 oder 5, umfassend die Schritte:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Zusammenführen der Mehrzahl an synthetischen Bildern des Untersuchungsbereichs des Untersuchungsobjekts zu einem aggregierten synthetischen Bild des Untersuchungsbereichs des Untersuchungsobj ekts,
- Ermitteln eines Streuungsmaßes auf Basis der Farbwerte korrespondierender Bildelemente des empfangenen Bildes und des aggregierten synthetischen Bildes, wobei miteinander korrespondierende Bildelemente denselben Teilbereich des Untersuchungsbereichs repräsentieren,
- Ermitteln mindestens eines Vertrauenswertes auf Basis des ermittelten Streuungsmaßes,
- Ausgeben des mindestens einen Vertrauenswertes.

7. Computer-implementiertes Verfahren nach einem der Ansprüche 1 bis 6, wobei die unterschiedlichen Varianten des generativen Modells zur Erzeugung einer Mehrzahl an synthetischen Bildern des Untersuchungsbereichs des Untersuchungsobjekts auf Basis des empfangenen Bildes durch Anwendung einer Dropout-Methode erstellt werden.

8. Computer-implementiertes Verfahren nach Anspruch 7, wobei die Dropout-Methode die Monte-Carlo-Dropout-Methode ist.

9. Computersystem umfassend
- eine Empfangseinheit,
- eine Steuer- und Recheneinheit und
- eine Ausgabeeinheit,
wobei die Steuer- und Recheneinheit konfiguriert ist,
- Die Empfangseinheit zu veranlassen, mindestens ein Bild eines Untersuchungsbereichs eines Untersuchungsobjekts zu empfangen, wobei das mindestens eine Bild eine Vielzahl an Bildelementen umfasst, wobei jedes Bildelement der Vielzahl an Bildelementen einen Teilbereich des Untersuchungsbereichs repräsentiert,
- eine Mehrzahl an synthetischen Bildern des Untersuchungsbereichs des Untersuchungsobjekts auf Basis des empfangenen Bildes mittels eines generativen Modells zu erzeugen, wobei jedes synthetische Bild mit einer unterschiedlichen Variante des generativen Modells erstellt wird,
- mindestens einen Vertrauenswertes zu ermitteln,
- die Ausgabeeinheit zu veranlassen, den mindestens einen Vertrauenswert auszugeben.

10. Computerlesbares Speichermedium umfassend ein Computerprogramm, das, wenn es in einen Arbeitsspeicher eines Computersystems geladen wird, das Computersystem veranlasst, folgende Schritte auszuführen:
- Empfangen mindestens eines Bildes eines Untersuchungsbereichs eines Untersuchungsobjekts, wobei das mindestens eine Bild eine Vielzahl an Bildelementen umfasst, wobei jedes Bildelement der Vielzahl an Bildelementen einen Teilbereich des Untersuchungsbereichs repräsentiert,
- Erzeugen einer Mehrzahl an synthetischen Bildern des Untersuchungsbereichs des Untersuchungsobjekts auf Basis des empfangenen Bildes mittels eines generativen Modells, wobei jedes synthetische Bild mit einer unterschiedlichen Variante des generativen Modells erstellt wird,
- Ermitteln mindestens eines Vertrauenswertes,
- Ausgeben des mindestens einen Vertrauenswertes.

11. Computersystem oder computerlesbares Speichermedium nach einem der Ansprüche 7 oder 8, wobei der Vertrauenswert auf Basis der Farbwerte miteinander korrespondierender Bildelemente der erzeugten synthetischen Bilder ermittelt wird, wobei miteinander korrespondierende Bildelemente denselben Teilbereich des Untersuchungsbereichs repräsentieren.
